Europäisches Patentamt

European Patent Office

Office européen des brevets

(11) Publication number: **0 425 375 A2**

## EUROPEAN PATENT APPLICATION

(21) Application number: 90402999.8

(51) Int. Cl.5: **G11B 11/10**

(22) Date of filing: 24.10.90

(30) Priority: 26.10.89 JP 279471/89

(43) Date of publication of application:
**02.05.91 Bulletin 91/18**

(84) Designated Contracting States:
**DE FR GB NL**

(71) Applicant: **Shin-Etsu Chemical Co., Ltd.**
**6-1, Otemachi 2-chome**
**Chiyoda-ku Tokyo 100(JP)**

(72) Inventor: **Shimizu, Yoshiaki**
**1914-1, Shimosakunobe Takatsu-Ku**
**Kawasaki-shi Kanagawa-Ken(JP)**
Inventor: **Nomura, Tadao**
**9-2-18, Arima, Miyamae-ku**
**Kawasaki-shi, Kanagawa-ken(JP)**
Inventor: **Tokunaga, Katsushi**
**6, Satsukigaoka-Higashi, Suita-shi**
**Kawasaki-shi, Kanagawa-ken(JP)**
Inventor: **Tawara, Yoshio**
**1603, Nakano 1-chome**
**Fukui-shi, Fukui-ken(JP)**

(74) Representative: **Armengaud, Alain**
**Cabinet ARMENGAUD AINE 3, Avenue**
**Bugeaud**
**F-75116 Paris(FR)**

(54) Magneto-optical recording medium.

(57) An improvement is proposed in the performance of a magneto-optical recording medium having a laminar structure consisting of (a) a transparent substrate plate, (b) a first protecting dielectric layer, (c) a recording layer of, e.g., an alloy of a rare earth metal and iron, cobalt or nickel, (d) a second protecting dielectric layer and (e) a metallic reflecting layer. The improvement consists in that the first and/or second protecting layers are formed from a binary composition of SiN, SiO or AlN and a fluoride of a rare earth element in a specified molar proportion to have a good balance of the light transmission and refractive index in a relatively short wavelength of light. The magneto-optical recording medium is imparted with greatly improved sensitivity and density of recording along with high stability against the attack by the atmospheric oxygen.

# MAGNETO-OPTICAL RECORDING MEDIUM

## BACKGROUND OF THE INVENTION

The present invention relates to a novel magneto-optical recording medium or, more particularly, to a magneto-optical recording medium having excellent sensitivity and high recording density as well as outstandingly improved stability in the lapse of time imparted by forming the protecting dielectric layers on the recording layer of the medium from a unique dielectric material having high light transmission in the range of relatively short wave lengths of light along with stability against the ambient influences.

So-called magneto-optical discs utilizing a magneto-optical recording medium are widely used in recent years as a device for high-density recording or a rewritable information-memory device. The magneto-optical recording medium in general has a four-layered laminar structure formed on one surface of a transparent substrate plate of an organic synthetic resin or inorganic glass including, in turn, a first transparent protecting layer formed from a dielectric material such as amorphous silicon nitride SiN, silicon monoxide SiO and the like, a recording layer made from an amorphous alloy of metals of a rare earth element and a transition element such as iron, cobalt and nickel, a second protecting layer which can be formed from the same dielectric material as in the first protecting layer and a light-reflecting layer of a metal such as aluminum, copper and the like. As compared with conventional magnetic recording media, the above described magneto-optical recording medium under current use thus far developed is advantageous in respect of the greatly increased recording density reaching more than 10 times of that in the magnetic recording medium. It is, however, still an important problem to further increase the recording density in magneto-optical recording media in order to further decrease the costs per bit.

It is usual that writing in such a magneto-optical disc is conducted by using a laser beam having a relatively large wavelength of about 800 nm despite the disadvantage mentioned below because no semiconductor lasers having a sufficiently high output are available emitting laser beams of a wavelength substantially shorter than 800 nm or 780 nm at the longest while lasers having such compactness as to be usable in magneto-optical recording system are limited to semiconductor lasers. Namely, it is important that the diameter of the laser beams for writing in a magneto-optical disc is as small as possible in order to make a record in fine pits with a consequently increased recording density while a laser beam of which the diameter is decreased to about 1 $\mu$m or smaller by using a lens system is subject to the influence of interference of light consequently to broaden the effective diameter of the beam resulting in blurred pits although this adverse phenomenon is less prominent when the wavelength of the laser beam is shorter to increase the recording density. Thus, it is eagerly desired to develop a magneto-optical recording medium having an improved record ing sensitivity capable of being written by using a laser beam of a short wavelength though with an output not high enough.

As is mentioned above, a magneto-optical recording medium is provided with two protecting layers sandwiching the recording layer. These protecting layers also serve to give an apparent increase or the so-called enhancement effect on the Kerr rotation angle $\theta_k$ by the multiple reflection of the laser beams between the recording layer and the substrate plate. In this regard, silicon nitride SiN and silicon monoxide SiO under conventional use are satisfactory. These dielectric materials, however, are not quite satisfactory in all respects because the light transmission through the layer of these materials is low, especially, in the short wavelength region of light so that an attempt to obtain a high recording density with laser beams of a short wavelength is always subject to a disadvantage of an unduly low recording sensitivity due to absorption of light in the protecting layers to decrease the intensity of light reaching the recording layer.

Another important problem to be considered in the magneto-optical recording media is the stability of the performance thereof over a long period of time since the amorphous alloy of a rare earth metal and a second transition metal is usually highly susceptible to oxidation by the atmospheric oxygen. In this regard, the protecting dielectric layers should desirably serve as a barrier against the attack of atmospheric oxygen and conventional dielectric materials are not always quite satisfactory in this regard.

It is further noted that, in addition to the above mentioned disadvantageously high susceptibility to oxidation, the conventional recording materials forming the recording layer in magneto-optical recording media, such as amorphous alloys of terbium, iron and cobalt, gadolinium, dysprosium, iron and cobalt and the like, have a relatively small Kerr rotation angle $\theta_k$ that sufficiently large C/N (carrier-to-noise) ratios cannot be obtained not to allow reproduction of the recorded information relying on the recording layer only. Therefore, the apparent or effective value of the Kerr rotation angle $\theta_k$ must be increased by relying on the multiple reflection of the laser beams between the substrate surface and the recording layer and between the recording layer and the reflecting layer.

It has been proposed in Japanese Patent Kokai 61-278061 that the protecting layers in a magneto-optical recording medium is formed from a fluoride of a rare earth element to serve as an oxygen barrier for the recording layer in view of the high corrosion resistance of rare earth fluorides. Rare earth fluorides as a material of the protecting layer proposed there, however, have another serious problem that the refractive index thereof is relatively small at around 1.6 so that the difference in the refractive indices between the substrate material and the material of the protecting layer cannot be high enough to ensure strong multiple reflection of the laser beams giving a high enhancement effect because soda lime glass and polycarbonate resin, as typical examples of the conventional material of substrates, have refractive indices of 1.52 and 1.58, respectively.

## SUMMARY OF THE INVENTION

The present invention, which has been completed with an object to solve the above mentioned problems in the conventional magneto-optical recording media, provides a magneto-optical recording medium which has a laminar structure comprising:

(a) a substrate plate having transparency;

(b) a first protecting layer formed, on one surface of the substrate plate, from a dielectric material;

(c) a recording layer formed, on the first protecting layer, from an alloy of a rare earth element and a transition metal element selected from the group consisting of iron, cobalt and nickel;

(d) a second protecting layer formed, on the recording layer, from a dielectric material; and

(e) a reflecting layer formed, on the second protecting layer, from a metal,

in which the dielectric material forming at least one of the first and the second protecting layers is a binary composition consisting of amorphous silicon nitride SiN, silicon monoxide SiO, aluminum nitride AlN or a combination thereof and a fluoride of a rare earth element in a molar proportion in the range from 20:80 to 80:20.

## BRIEF DESCRIPTION OF THE DRAWING

Figures 1 and 2 are each a graph showing the % light transmission through a 100 nm thick layer of a dielectric material composed of silicon nitride and a different rare earth fluoride as a function of the molar fraction of the latter.

Figures 3 and 4 are each a graph showing the refractive index of a layer of a dielectric material composed of silicon nitride and a different rare earth fluoride as a function of the molar fraction of the latter for light of 550 nm wavelength.

Figure 5 is a graph showing the change in the coercive force of the recording layer in the magneto-optical recording media prepared in the example described below with different rare earth fluorides after accelerated aging.

## DETAILED DESCRIPTION OF THE PREFERRED EMBODIMENTS

As is described above, the most characteristic feature of the inventive magneto-optical recording medium consists in the novel and unique composition of the dielectric material forming either one or both of the first and the second protecting layers. The protecting layer formed from this unique binary dielectric composition has a high light transmission even in a relatively short wave length of light and highly protective against oxidation of the recording layer so that the magneto-optical recording medium is imparted with a high enhancement effect and has advantages of greatly improved recording sensitivity and recording density as well as stability.

The laminar structure of the inventive magneto-optical recording medium consists of a transparent substrate plate, a first protecting layer, a recording layer, a second protecting layer and a reflecting layer in a similar way to conventional magneto-optical recording media.

The material of the substrate plate can be any of conventional transparent materials used for the purpose including, for example, inorganic glassy materials such as fused quartz glass and soda lime glass and organic plastic resins such as polymethyl methacrylate and polycarbonate. The substrate plate usually has a thickness in the range from 0.5 to 2.0 mm.

The first protecting layer on the substrate plate and the second protecting layer formed on the recording layer on the first protecting layer are each formed from a dielectric material. Although the dielectric material forming one of these protecting layers can be conventional including silicon nitride SiN, silicon monoxide SiO, aluminum nitride AlN and combinations thereof, it is essential in the invention that at least either one or, preferably, both of these two protecting layers is formed from an amorphous binary composition consisting of (A) a first dielectric material including silicon nitride SiN, silicon monoxide SiO, aluminum nitride AlN and a combination thereof and (B) a second dielectric material which is a fluoride of a rare earth element in a specified molar proportion. When the second protecting layer is to be formed from such a binary composition, the first protecting layer can be formed from any conventional dielectric material. The rare earth fluoride as the second dielectric material can be the fluoride of any rare earth element but it is preferably the fluoride of a rare earth element selected from the group consisting of europium, lanthanum, praseodymium, cerium, neodymium, terbium and dysprosium.

The binary composition forming either one or both of the protecting layers should be composed of the first and the second dielectric materials in a molar proportion in the range from 20:80 to 80:20. When the molar proportion of the second dielectric material, i.e. rare earth fluoride, is smaller than 20%, the light transmission through the protecting layer formed from the binary composition is unduly decreased while, when the molar proportion thereof is larger than 80%, the refractive index of the layer is decreased to 1.8 or smaller so that the desired enhancement effect would be insufficient.

The protecting layer formed from such a binary composition can be formed on the substrate surface or on the recording layer by any known method such as chemical vapor-phase deposition method, vacuum deposition method and the like but it is preferable to conduct the high-frequency sputtering method therefor. The sputtering procedure can be performed by using a single target which is a powder-metallurgically sintered body prepared from a powder mixture of an ingredient for the first dielectric material, i.e. SiN, SiO and/or AlN, and the second dielectric material, i.e. rare earth fluoride, in an appropriate proportion. Alternatively, the sputtering procedure can be performed in a multiple-sputtering method by using two separate target materials of which one is for the first dielectric material such as SiN, SiO and AlN and the other is for the second dielectric material in the form of a sintered body. Conveniently, the multiple-sputtering method can be performed by using a composite target which is a silicon wafer mounting a number of sintered pellets of a rare earth fluoride in an atmosphere containing nitrogen so that the silicon wafer serves as the source for SiN and the pellets serves as the source for the rare earth fluoride ingredient. The molar proportion of the first and the second dielectric materials in the deposited dielectric layer by the composite-target method can be controlled by modifying the number of the rare earth fluoride pellets mounted on the silicon wafer so as to change the surface areas of the first and the second target materials exposed to the atmosphere of sputtering. The film thickness of the first protecting layer is preferably in the range from 50 to 120 nm in order to obtain the highest enhancement effect.

The first protecting layer formed on the substrate surface is then overlaid with the recording layer. The material of the recording layer can be conventional including an amorphous binary alloy of a rare earth metal and a transition metal other than rare earths. The element of the rare earth metal is preferably selected from the group consisting of terbium, dysprosium, gadolinium, neodymium and the like and the transition element other than rare earths is preferably selected from the group consisting of iron, cobalt, nickel and the like. Typically, the alloy is composed of terbium, iron and cobalt or gadolinium, dysprosium, iron and cobalt though not particularly limitative thereto. The film thickness of the recording layer is preferably in the range from 20 to 50 nm. When the thickness is too large, the light transmission through the layer is greatly decreased while, when the thickness is too small, difficulties are encountered in the preparation of so thin layers with good reproducibility. The recording layer can be formed on the first protecting layer by the high-frequency or direct-current sputtering method using a target of the alloy prepared by sintering or casting.

The thus formed recording layer is then overlaid with the second protecting layer of a dielectric material which can be the binary composition as described above or, when the first protecting layer has been formed from the binary composition, can be any conventional dielectric material. The procedure for forming the second protecting layer is the same as or similar to that in the formation of the first protecting layer. The thickness of the second protecting layer is preferably in the range from 30 to 80 nm.

The top layer formed on the second protecting layer mentioned above is the reflecting layer to reflect light. The material forming the reflecting layer can be a conventional metallic material of high light-reflectivity including aluminum, copper, gold, silver, platinum and the like. The film thickness of the reflecting layer is not particularly limitative provided that reflection of light thereon is complete. For example, the thickness can be around 100 nm.

In the following, the magneto-optical recording medium of the present invention is described in more detail by way of examples.

Example.

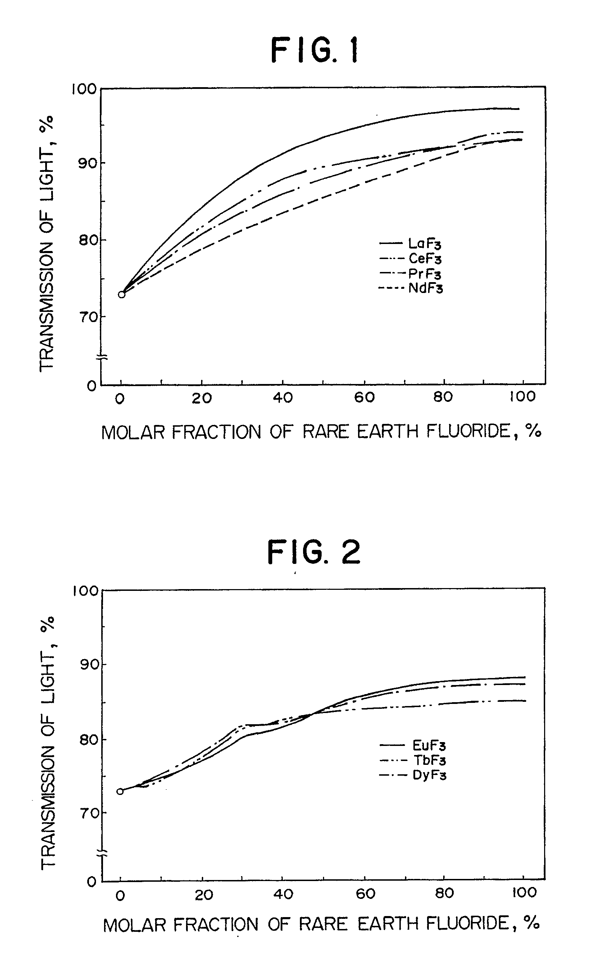

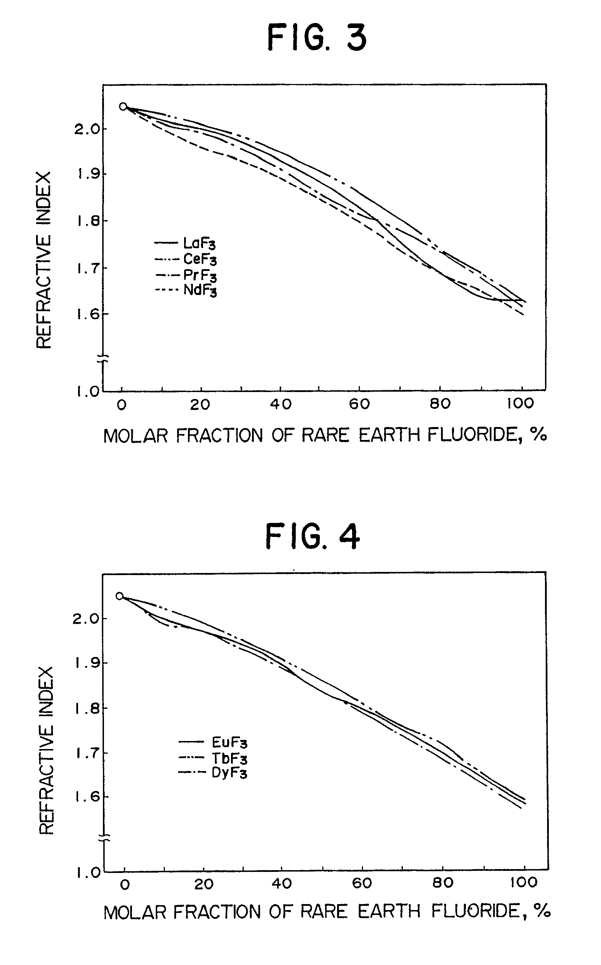

Optical properties of the layers formed from the above described binary composition were examined in the following manner. Thus, seven kinds of rare earth fluorides including lanthanum fluoride, cerium fluoride, praseodymium fluoride, neodymium fluoride, europium fluoride, terbium fluoride and dysprosium fluoride were each sintered into pellets of 10 mm diameter. A dielectric layer having a thickness of 100 nm was formed from a binary composition of silicon nitride and a rare earth fluoride in a varied molar proportion on a plate of fused quartz glass having a thickness of 1.5 mm by the high-frequency magnetron sputtering method with a high-frequency output of 500 watts in an atmosphere of a 2:1 by volume mixture of argon and nitrogen under a pressure of $5 \times 10^{-3}$ Torr using a composite target which was a semiconductor grade silicon wafer having a diameter of 4 inches mounting a varied number of the sintered rare earth fluoride pellets. The thus formed dielectric layer on the fused quartz glass substrate was examined for the % light transmission and refractive index by using light of 550 nm wavelength to give the results shown in Figures 1 and 2 and in Figures 3 and 4, respectively, as a function of the molar fraction of the rare earth fluoride in the binary composition for each of the rare earth fluorides. Each of these figures includes the data obtained for the dielectric layer formed from silicon nitride alone or from the rare earth fluoride alone. As is clear from these figures, the increase in the molar fraction of the rare earth fluoride in the binary composition of the layer has an effect of increasing the light transmission through the layer and decreasing the refractive index of the layer.

The magneto-optical recording media according to the invention were prepared by using the composite targets in the high-frequency magnetron sputtering for forming the first and the second protecting layers of a binary composition composed of 60% by moles of silicon nitride and 40% by moles of the rare earth fluoride. Thus, the first dielectric protecting layer having a thickness of 80 nm was formed by sputtering on a plate of soda lime glass having a thickness of 1.5 mm as the substrate using a composite target having an appropriate number of the sintered rare earth fluoride pellets on a 4-inch diameter silicon wafer under substantially the same conditions as described above. Then, a recording layer having a thickness of 30 nm was formed by sputtering using a target of an alloy of the composition corresponding to $Tb_{23}Fe_{67}Co_{10}$. Further, the second protecting layer having a thickness of 80 nm was formed on the recording layer in the same manner as in the formation of the first protecting layer. Finally, a light reflecting layer having a thickness of 100 nm was formed by sputtering on the second protecting layer using an aluminum target.

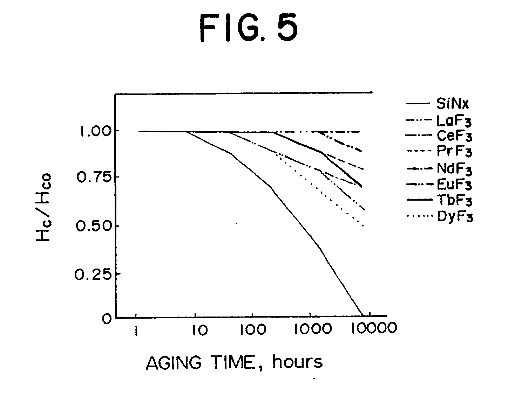

The magneto-optical recording media prepared in the above described manner were subjected to the measurement of the Kerr loop either as prepared or after accelerated aging for up to several thousands of hours at 80 °C in an atmosphere of 85% relative humidity. Figure 5 graphically shows the changes in the coercive force of the recording layer in the lapse of time for each of the rare earth fluorides taking the ratio of $H_c/H_{co}$ as the ordinate, of which $H_{co}$ is the initial value of the coercive force and $H_c$ is the coercive force after accelerated aging, and the length of time as the abscissa. Figure 5 also includes the results obtained with a magneto-optical recording medium in which the protecting layers were formed from silicon nitride alone. As is clear from this figure, substantial improvements can be obtained against aging when the protecting layers are formed from a binary composition of 40% by moles of the rare earth fluoride and 60% by moles of silicon nitride as compared with the protecting layers formed from silicon nitride alone. The best results were obtained with neodymium fluoride as the rare earth fluoride.

## Claims

1. A magneto-optical recording medium which has a laminar structure comprising:
  (a) a substrate plate having transparency;
  (b) a first protecting layer formed, on one surface of the substrate plate, from a dielectric material;
  (c) a recording layer formed, on the first protecting layer, from an alloy of a rare earth element and a transition metal element selected from the group consisting of iron, cobalt and nickel;
  (d) a second protecting layer formed, on the recording layer, from a dielectric material; and
  (e) a reflecting layer formed, on the second protecting layer, from a metal,
  in which the dielectric material forming at least one of the first and the second protecting layers is a binary composition consisting of amorphous silicon nitride SiN, silicon monoxide SiO, aluminum nitride AlN or a combination thereof and a fluoride of a rare earth element in a molar proportion in the range from 20:80 to 80:20.

2. The magneto-optical recording medium as claimed in claim 1 in which the rare earth fluoride in the binary composition forming the protecting layer is selected from the group consisting of europium fluoride, lanthanum fluoride, praseodymium fluoride, neodymium fluoride, terbium fluoride and dysprosium fluoride.

3. The magneto-optical recording medium as claimed in claim 1 in which the first protecting layer has a thickness in the range from 50 to 120 nm.

4. The magneto-optical recording medium as claimed in claim 1 in which the second protecting layer has a thickness in the range from 30 to 80 nm.

5. The magneto-optical recording medium as claimed in claim 1 in which the protecting layer formed from the binary composition has a refractive index of at least 1.8 for light having a wavelength of 550 nm.

6. The magneto-optical recording medium as claimed in claim 1 in which transmission of light of 550 nm wavelength through the protecting layer formed from the binary composition is at least 80% when the protecting layer has a thickness of 100 nm.

7. The magneto-optical recording medium as claimed in claim 1 in which the rare earth element in the alloy forming the recording layer is selected from the group consisting of terbium, dysprosium, gadolinium and neodymium.

8. The magneto-optical recording medium as claimed in claim 1 in which the metal forming the reflecting layer is selected from the group consisting of aluminum, gold, copper, platinum and silver.

9. The magneto-optical recording medium as claimed in claim 1 in which the dielectric material forming at least one of the first and the second protecting layers is a binary composition consisting of amorphous silicon nitride SiN and a fluoride of a rare earth element

# FIG. 1

LaF₃ / CeF₃ / PrF₃ / NdF₃ plotted as TRANSMISSION OF LIGHT, % versus MOLAR FRACTION OF RARE EARTH FLUORIDE, %

# FIG. 2

EuF₃ / TbF₃ / DyF₃ plotted as TRANSMISSION OF LIGHT, % versus MOLAR FRACTION OF RARE EARTH FLUORIDE, %

# FIG. 3

LaF₃
CeF₃
PrF₃
NdF₃

# FIG. 4

EuF₃
TbF₃
DyF₃

# FIG. 5